# FASCICULE DE BREVET EUROPEEN

(11) **EP 1 312 909 B1**
(45) Date de publication et mention de la délivrance du brevet: **16.06.2004**
(21) Numéro de dépôt: 02292779.2
(22) Date de dépôt: 07.11.2002
(51) Int. Cl.: G01M 17/08

(54) **Dispositif pour la réalisation d'essais mécaniques sur des structures ( ferroviaire, lanceur pyrotechnique réglable, voie ferrée )**
Vorrichtung für mechanische Versuche an Strukturen ( Eisenbahn, verstellbarer pyrotechnischer Kolben, Gleis )
Device for mechanical tests on structures ( railway, adjustable pyrotechnical piston, rails )

(30) Priorité: 13.11.2001 FR 0114650
(43) Date de publication de la demande: 21.05.2003
(73) Titulaire: Alstom, 75116 Paris (FR)
(72) Inventeur: Huss, Pierre, 67000 Strasbourg (FR); Calvignac, François, 67500 Haguenau (FR); Schmitt, Claude, 57620 Lemberg (FR); Pognon, Jean-Marie, 67110 Reichshoffen (FR); Muller, Jean-Charles, 67340 Reipertswiller (FR)
(74) Mandataire: de Lambilly Delorme, Marie Pierre

(56) Documents cités:
- FR-A- 2 765 685
- US-A- 5 325 700
- PATENT ABSTRACTS OF JAPAN vol. 1997, no. 01, 31 janvier 1997 (1997-01-31) & JP 08 240509 A (MITSUBISHI MOTORS CORP), 17 septembre 1996 (1996-09-17)
- DATABASE WPI Section EI, Week 199212 Derwent Publications Ltd., London, GB; Class R15, AN 1992-095445 XP002211257 & SU 1 658 006 A (FERR METAL TRANSPOR), 23 juin 1991 (1991-06-23)

## Description

L'invention se rapporte à un dispositif pour la réalisation d'essais mécaniques sur des structures, notamment des éléments absorbeurs d'énergie du domaine ferroviaire. De tels essais présentent la particularité de nécessiter des énergies pouvant atteindre des valeurs relativement importantes de l'ordre de 6 MJ.

Il est connu, dans le domaine ferroviaire, d'utiliser des dispositifs d'essais de chocs dans lesquels un véhicule ferroviaire est mis en mouvement sur une voie ferrée, au moyen d'une locomotive ou bien encore par gravité à l'aide d'une portion de voie en pente, le véhicule une fois lancé venant percuter un obstacle disposé sur la voie ferrée. De tels dispositifs d'essais présentent cependant l'inconvénient de nécessiter soit une prise d'élan importante, généralement supérieure à 500 m, lorsque le véhicule est lancé par une locomotive, soit une dénivelée importante dans le cas de la mise en mouvement par gravité, ce qui rend très coûteuses les installations dédiées à ces essais.

Il est connu, du document FR 2 765 685, un dispositif de réalisation d'accélération et de décélération utilisant un lanceur pyrotechnique. Un tel lanceur pyrotechnique présente l'avantage de pouvoir propulser avec une accélération programmée et une forte énergie un équipement mobile sur une piste d'essai. Toutefois, le dispositif d'essais divulgué dans ce document n'est pas adapté pour le lancement de différents types de véhicules, et notamment ferroviaires, et ne permet pas la réalisation d'une grande variété d'essais mécaniques mettant en oeuvre de plus ou moins grandes quantités d'énergie.

Or, il est nécessaire, dans le domaine ferroviaire, de tester différents types d'absorbeurs d'énergie possédant des capacités d'absorption très différentes. En effet, les véhicules ferroviaires les plus récents sont équipés d'éléments absorbeurs d'énergie disposés dans le prolongement du châssis du véhicule et dimensionnés pour absorber une très grande quantité d'énergie, par exemple pour amortir un choc avec un autre véhicule ferroviaire, mais peuvent également comporter des éléments absorbeurs d'énergie dimensionnés pour se déformer à partir d'un plus faible niveau d'énergie, souvent disposés au niveau de la structure de la cabine de pilotage, permettant l'absorption d'un choc mettant en oeuvre moins d'énergie, tel un choc avec un camion.

Aussi, un but de la présente invention est de proposer un dispositif pour la réalisation d'essais mécaniques sur des structures, et notamment des absorbeurs d'énergie du domaine ferroviaire, comprenant un lanceur pyrotechnique qui permette le lancement d'éléments mobiles de gabarit très différents sous forte énergie tout en minimisant les risques de tangage de ces derniers. Un autre but de la présente invention est de proposer un dispositif pour la réalisation d'essais de chocs qui soit polyvalent en permettant le test d'éléments absorbeurs de gabarit et de résistance très différents.

A cet effet, l'invention a pour objet un dispositif pour la réalisation d'essais mécaniques sur des structures, notamment des éléments absorbeur d'énergie, comportant un lanceur pyrotechnique comportant un tube de lancement dans lequel coulisse une tige de poussée est disposé à une extrémité d'une portion de voie ferrée, le lanceur pyrotechnique étant supporté dans sa partie centrale par un élément support et étant bloqué vers l'arrière par un élément butoir disposé derrière le lanceur pyrotechnique, l'élément support et l'élément butoir comportant des moyens de fixation permettant le maintien du lanceur pyrotechnique à différentes hauteurs par rapport aux rails de la voie ferrée.

Selon des modes particuliers de réalisation, le dispositif pour la réalisation d'essais mécaniques selon l'invention peut comprendre l'une ou plusieurs des caractéristiques suivantes prises isolément ou selon toutes les combinaisons techniquement possibles :
- l'élément butoir et l'élément support reposent sur une dalle de béton, cette dernière supportant également une partie de la portion de voie ferrée ;
- la dalle de béton est ancrée dans le sol au moyen de pieux d'ancrage plantés dans le sol et noyés partiellement dans la dalle de béton ;
- la dalle de béton comporte une fosse s'étendant entre les rails de la voie ferrée, la fosse recevant un chariot de lancement coulissant entre les rails et pouvant être propulsé par la tige de poussée ;
- les moyens de fixation du lanceur pyrotechnique sur l'élément support et l'élément butoir permettent de descendre le lanceur pyrotechnique sous le niveau des rails de la voie ferrée et la fosse présente une paroi faisant face au lanceur pyrotechnique pouvant recevoir un élément absorbeur d'énergie sur lequel vient buter le chariot de lancement ;
- l'élément support est un portique comprenant deux éléments verticaux munis de multiples trous permettant la fixation à différentes hauteurs de pattes supportant un anneau entourant le tube de lancement, l'anneau pouvant pivoter sur les pattes suivant un axe horizontal perpendiculaire à l'axe du tube de lancement ;
- l'élément butoir est constitué d'un bloc de béton comportant une paroi sensiblement verticale sur laquelle est fixée une plaque de fixation disposée parfaitement perpendiculairement au plan des rails de la voie ferrée, la plaque fixation comportant de multiples trous permettant la fixation à différentes hauteurs d'une chaise d'appui à l'extrémité de laquelle est fixé l'extrémité arrière du lanceur pyrotechnique ;
- la tige de poussée est supportée directement par le véhicule au moyen d'un dispositif interface muni de moyens de réglage de la coaxialité de la tige de poussée par rapport au tube de lancement.

On comprendra mieux les buts, aspects et avantages de la présente invention, d'après la description donnée ci-après d'un mode particulier de réalisation de l'invention, présenté à titre d'exemple non limitatif, en se référant aux dessins annexés, dans lesquels :
- la figure 1 est une vue en perspective d'un dispositif pour la réalisation d'essais mécaniques sur des éléments absorbeurs d'énergie selon un mode particulier de réalisation de l'invention ;
- la figure 2 est une vue de détail, en perspective, du portique supportant, dans sa partie centrale, le lanceur pyrotechnique du dispositif de la figure 1 ;
- la figure 3 est une vue de détail, en perspective, de l'élément butoir assurant l'immobilisation axiale du lanceur pyrotechnique de la figure 1 ;
- les figures 4 à 8 sont des vues représentant schématiquement l'utilisation du dispositif selon l'invention pour la réalisation de différents essais mécaniques ;
- la figure 9 est une vue en perspective du dispositif interface réalisant la liaison entre le véhicule et la tige de poussée du dispositif d'essais selon l'invention.

Pour faciliter la lecture du dessin, seuls les éléments nécessaires à la compréhension de l'invention ont été représentés. Les mêmes éléments portent les mêmes références d'une figure à l'autre.

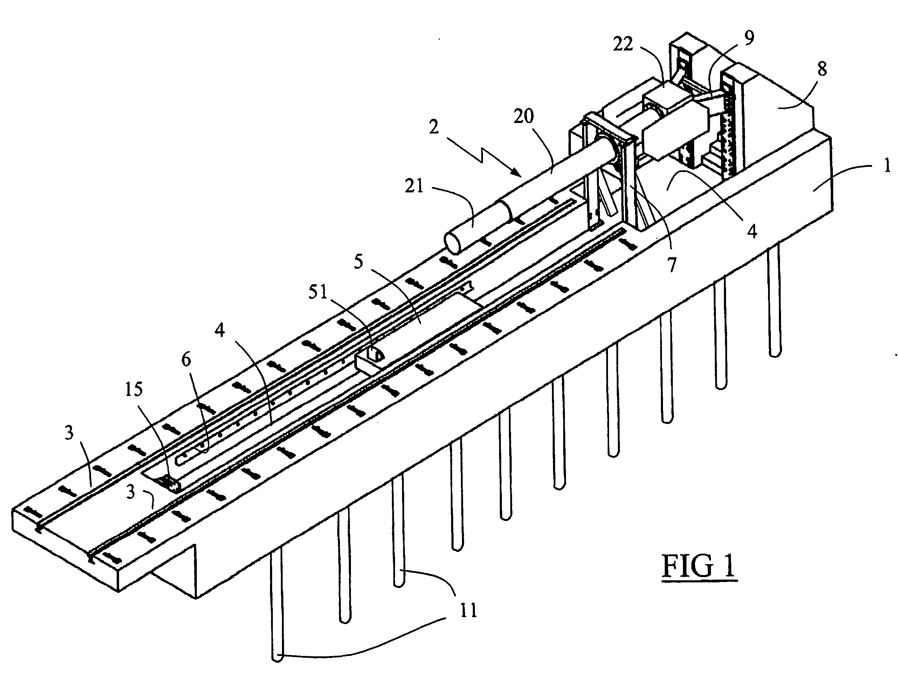

La figure 1 représente un mode de réalisation particulier du dispositif pour la réalisation d'essais mécaniques selon l'invention dans lequel le dispositif d'essais comporte une dalle de béton 1 s'étendant en longueur sur plusieurs dizaines de mètres, cette dalle de béton 1 possédant une largeur de l'ordre de 2 m et une épaisseur de l'ordre de 1,5 m. La dalle de béton 1 est enfouie dans le sol de telle sorte que sa surface supérieure soit au niveau du sol de l'espace environnant. Avantageusement, la dalle de béton 1 est ancrée au moyen d'une série de pieux 11 insérés dans le sol et noyés partiellement dans la dalle de béton 1 afin de garantir une bonne tenue de la dalle de béton 1 dans des sols meubles.

Conformément à la figure 1, la dalle de béton 1 supporte à une extrémité un lanceur pyrotechnique 2, connu en soi, capable de fournir une énergie variable pouvant atteindre 6 MJ. Ce lanceur pyrotechnique 2 comporte un tube de lancement 20 dans lequel coulisse un piston de poussée, non représenté sur les figures, appuyant sur une tige de poussée 21, le piston de poussée étant retenu en fin de course à l'intérieur du tube de lancement 20 par des butées, la tige de poussée 21 étant quant à elle libre de sortir du tube de lancement 20. Le piston de poussée est propulsé à l'intérieur du tube de lancement 20 par des gaz fournis par des générateurs de gaz pyrotechniques 22 disposés en partie arrière du lanceur 2, ces générateurs 22 pouvant produire des gaz suivant une pression programmée permettant d'obtenir une propulsion du piston de poussée suivant une accélération programmée.

La dalle de béton 1 supporte de plus, devant le lanceur pyrotechnique 2, une portion de voie ferrée 3 s'étendant sur toute la longueur de la dalle de béton 1 et se prolongeant également au-delà de la dalle de béton 1 sur plusieurs dizaines de mètres, les rails de la voie ferrée 3 étant enfouis dans le béton de telle sorte que la surface supérieure des rails soit affleurante avec la surface supérieure de la dalle de béton 1.

La dalle de béton 1 comporte une fosse 4 s'étendant sous le lanceur pyrotechnique 2 et se prolongeant devant ce dernier sur plusieurs dizaines de mètres entre les rails de la voie ferrée 3, cette fosse 4 comprenant un chariot de lancement 5 coulissant longitudinalement sur des guides 6 disposés à l'intérieur de la fosse 4. La fosse 4 présente à l'extrémité des guides 6, à une distance de l'ordre de 40 m du lanceur pyrotechnique 2, une paroi faisant face au lanceur pyrotechnique 2, cette paroi pouvant recevoir un absorbeur d'énergie 15 sur lequel vient buter le chariot de lancement 5. Avantageusement, la fosse 4 est également munie d'inserts sur ses parois latérales, ces inserts permettant la fixation d'une paroi frontale intermédiaire permettant le support d'un élément absorbeur d'énergie, par exemple à une distance de l'ordre de 15 m ou 25 m par rapport au lanceur pyrotechnique 2, sur lequel vient buter le chariot de lancement 5. Le chariot de lancement 5 comporte sur sa face supérieure un anneau d'arrimage 51 permettant de le rendre solidaire d'un véhicule léger reposant sur les rails de la voie ferrée.

Conformément à l'invention, le lanceur pyrotechnique 2 est supporté en son centre par un portique 7 fixé à la dalle de béton 1 et est immobilisé au niveau de sa partie arrière par un élément butoir 8 ancré dans la dalle de béton 1.

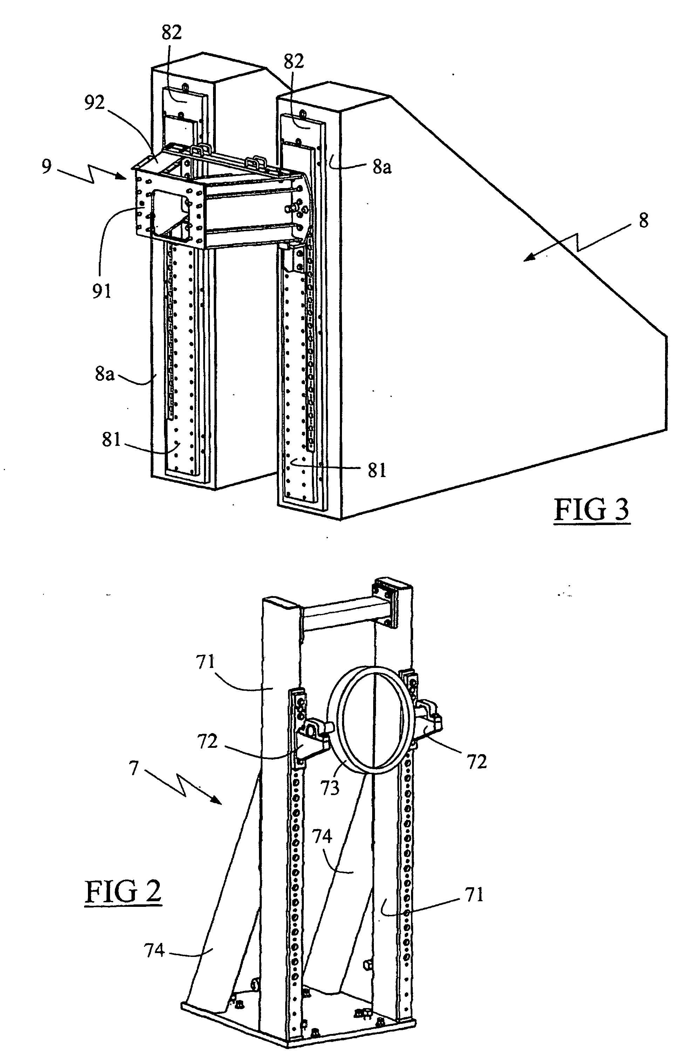

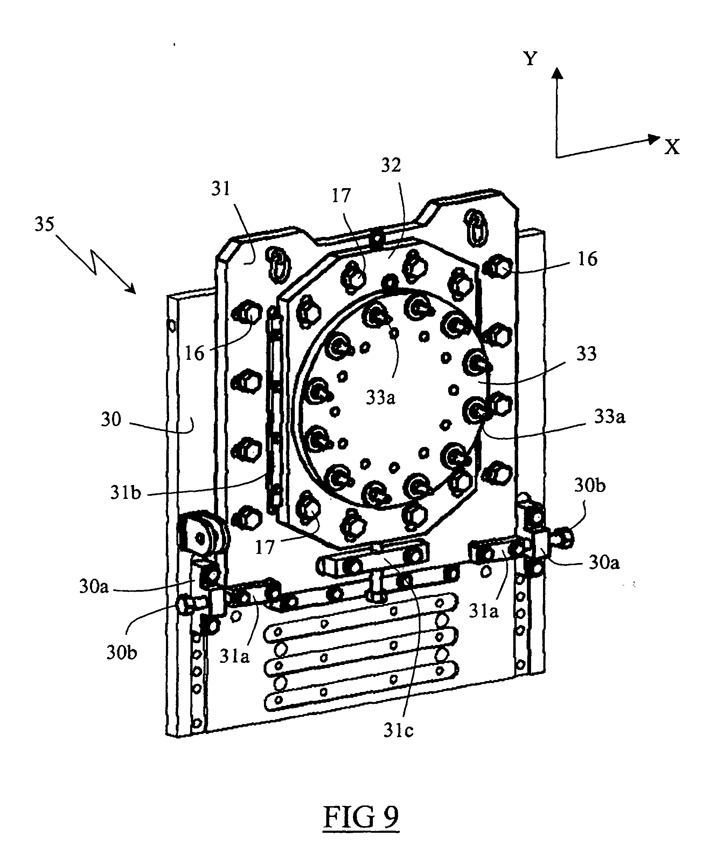

Le portique 7, représenté plus en détail sur la figure 2, comporte deux éléments verticaux 71 munis de multiples trous permettant la fixation à différentes hauteurs de pattes 72 supportant un anneau 73 entourant le tube de lancement 20, non représenté sur cette figure, cet anneau 73 étant monté sur les pattes 72 suivant un axe horizontal perpendiculaire au tube de lancement 20. Les éléments verticaux 71 sont renforcés dans leur partie arrière par des barres de renforts 74.

L'élément butoir 8, représenté plus en détail sur la figure 3, est formé d'un bloc de béton scindé en deux pour permettre le passage d'un escalier d'accès au lanceur pyrotechnique 2 et comporte une paroi 8a s'étendant verticalement derrière le lanceur pyrotechnique 2 sur laquelle est fixée une chaise d'appui 9. Cette chaise d'appui 9 comporte une surface d'appui 91 destinée à être fixée directement sur la partie arrière du lanceur pyrotechnique 2 et présente deux pieds obliques 92 venant se fixer sur deux plaques de fixation 81 supportée par la paroi verticale 8a de l'élément butoir 8, ces plaques de fixation 81 étant munies de multiples trous permettant la fixation de la chaise d'appui 9 à différentes hauteurs. Conformément à la figure 3, une plaque intermédiaire 82 métallique est interposée entre la plaque de fixation 81 et la paroi verticale 8a de l'élément butoir 8, cette plaque intermédiaire 82 présentant une épaisseur usinée très précisément pour assurer une parfaite perpendicularité des plaques de fixation 81 par rapport aux rails de la voie ferrée 3, en compensant les éventuels défauts de perpendicularité de la paroi 8a. Une telle précision dans le positionnement des plaques de fixation 81 permet ainsi d'assurer un excellent parallélisme entre le tube de lancement 20 et les rails de la voie ferrée 3 par l'intermédiaire de la chaise d'appui 9.

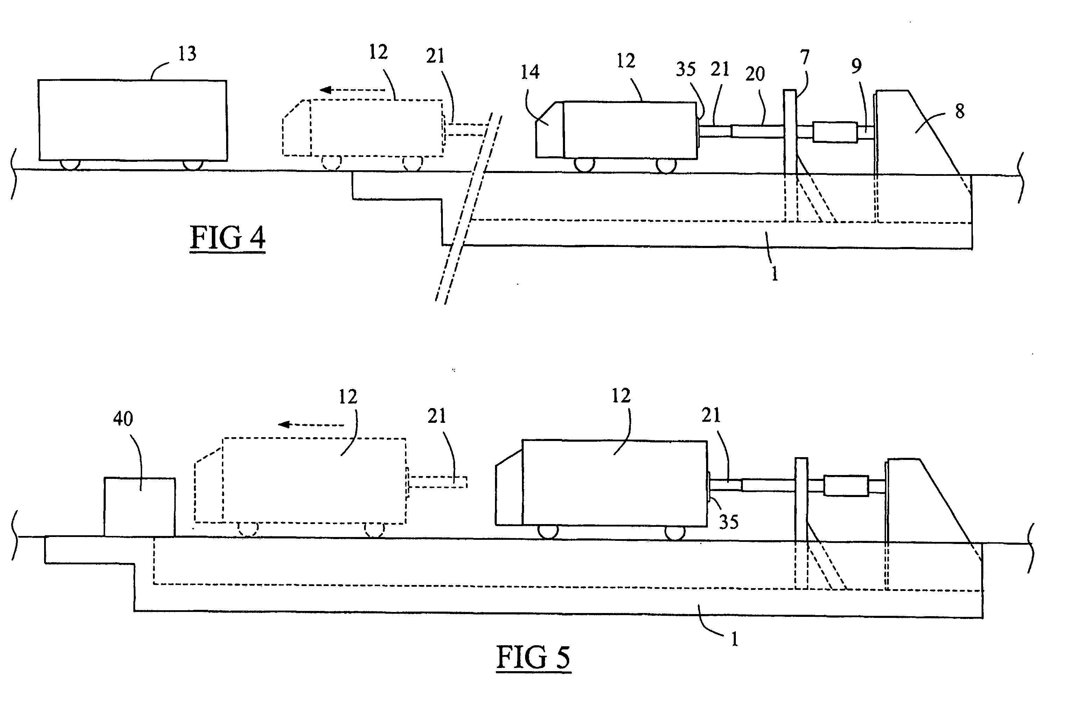

Avantageusement, l'éventail des hauteurs de fixation de la chaise d'appui 9 sur l'élément butoir 8 et des pattes 72 sur le portique 7 permettront des tirs avec un axe du tube de lancement 20 disposé entre -300 mm et +1500 mm avec un pas discret de 100 mm permettant ainsi de réaliser différentes configurations de tirs dont quelques-unes unes sont représentées sur les figures 4 à 8.

La figure 4 représente un exemple de configuration de tir pour la réalisation d'essais de chocs au moyen du dispositif de la figure 1, dans lequel le lanceur pyrotechnique 2 est utilisé comme une catapulte, mettant en oeuvre une énergie de l'ordre de 1 MJ, pour propulser à une vitesse donnée un véhicule test 12 pesant de l'ordre de 3 tonnes sur un véhicule à l'arrêt 13, pesant de l'ordre de 80 tonnes, disposé en aval sur la voie ferrée 3. Dans cette configuration, la face avant du véhicule test 12 est munie d'un élément absorbeur d'énergie 14 à tester et le lanceur pyrotechnique 2 est disposé à une hauteur telle que l'axe de la tige de poussée 21 passe sensiblement par le centre de gravité du véhicule test 12, limitant ainsi tout risque de tangage et donc de déraillement lors du catapultage du véhicule test 12.

Préférentiellement, la face arrière du véhicule test 12 est munie d'un dispositif interface 35, tel que représenté sur la figure 9, sur lequel est fixée l'extrémité de la tige de poussée 21 du lanceur 2, ce dispositif interface 35 comportant des moyens permettant de régler la coaxialité de la tige de poussée 21 par rapport au tube de lancement 20. Conformément à la figure 9, le dispositif interface 35 comporte une embase 30 rendue solidaire du véhicule 12 en étant par exemple fixée sur la paroi verticale arrière du véhicule test 12. Cette embase 30 supporte une première plaque de réglage 31 qui est immobilisée sur l'embase 30 au moyen de vis de fixation 16, ces vis de fixation traversant la première plaque 31 par des trous oblongs autorisant un déplacement suivant l'axe X de la première plaque 31 par rapport à l'embase 30 lorsque les vis de fixation 16 ne sont pas serrées. L'embase 30 présente une largeur supérieure à la largeur de la première plaque 31 et supporte latéralement, de chaque côté de la première plaque 31, un taquet 30a comportant un alésage fileté suivant l'axe X muni d'une vis de réglage 30b, cette dernière présentant une extrémité prenant appui contre une butée 31a portée par la première plaque 31, les deux taquets 30a permettant le positionnement précis suivant l'axe X de la première plaque 31 par rapport à l'embase 30 avant son immobilisation par le serrage des vis de fixation 16.

Conformément à la figure 9, la première plaque de réglage 31 supporte quant à elle une seconde plaque réglage 32 de dimension réduite par rapport aux dimensions de la première plaque de réglage 31, cette seconde plaque 32 étant immobilisée sur la première plaque 31 au moyen de vis de fixation 17 traversant des trous oblongs de la seconde plaque 32 et venant se visser dans des alésages filetés de la première plaque 31 prévus à cet effet, les trous oblong de la seconde plaque 32 autorisant un déplacement suivant l'axe Y de la seconde plaque de réglage 32 par rapport à la première plaque 31 lorsque les vis de fixation 17 ne sont pas serrées. La première plaque 31 comporte également de chaque coté de la seconde plaque 32 des règles 31b assurant le guidage de la seconde plaque 32 sur la première plaque 31 suivant l'axe Y en empêchant tout mouvement suivant l'axe X. La première plaque 31 comporte enfin en regard de la partie inférieure de la seconde plaque 32 un taquet 31c comportant un alésage fileté suivant l'axe Y muni d'une vis de réglage dont l'extrémité vient appuyer sur le bord inférieur de la première plaque 31 et permet son positionnement précis suivant l'axe Y avant son immobilisation par le serrage des vis de fixations 17.

La seconde plaque 32 comporte en son centre un disque support 33 qui vient se fixer directement sur l'extrémité de la tige de poussée 21, ce disque présentant un pourtour sphérique coopérant avec une ouverture de forme complémentaire formée dans la seconde plaque 32, réalisant ainsi une liaison rotule permettant la rotation du plan du disque 33 par rapport au plan de la seconde plaque 32. De manière préférentielle, la seconde plaque 32 comporte une vis de bridage permettant de bloquer le mouvement de rotation du disque 33 par rapport à la seconde plaque 32. Le centrage de la tige de poussée 21 sur le disque support 33 est réalisé au moyen de multiples tenons 33a réparties en bordure du disque 33 et venant s'insérer dans des trous de l'extrémité de la tige de poussée 21, l'immobilisation définitive étant réalisée au moyen de vis de fixation traversant des trous du disque 33 et venant se visser dans des alésages filetés prévus à cet effet sur l'extrémité de la tige de poussée 21.

Le dispositif interface 35 ainsi réalisé permet de rendre solidaire le véhicule 12 à propulser de la tige de poussé 21 du dispositif d'essai tout en permettant le réglage de la coaxialité de la tige de poussée 21 avec le tube de lancement 20, une parfaite coaxialité étant indispensable pour l'obtention d'une poussée optimale sans risque de détérioration du dispositif d'essai.

La figure 5 représente une autre configuration d'utilisation du dispositif d'essais selon l'invention dans laquelle le lanceur pyrotechnique 2 est utilisé comme catapulte pour propulser avec une énergie de 6 MJ, un véhicule test 12 pesant de l'ordre de 55 t sur un obstacle 40 disposé sur la voie. Dans cette configuration, le lanceur pyrotechnique 2 est placé légèrement plus haut que dans la configuration précédente de façon à ce que la tige de poussée 21 soit toujours sensiblement alignée avec le centre de gravité du véhicule test 12. De manière semblable à la configuration précédente, la face avant du véhicule test 12 est munie d'un élément absorbeur d'énergie 14 à tester et la face arrière du véhicule 12 est reliée à la tige de poussée 21 par l'intermédiaire du dispositif interface 35 précédemment décrit. Dans ce type d'essais, la fosse 4 peut avantageusement être équipée d'une caméra en contre plongée permettant de filmer par dessous les déformations lors du choc.

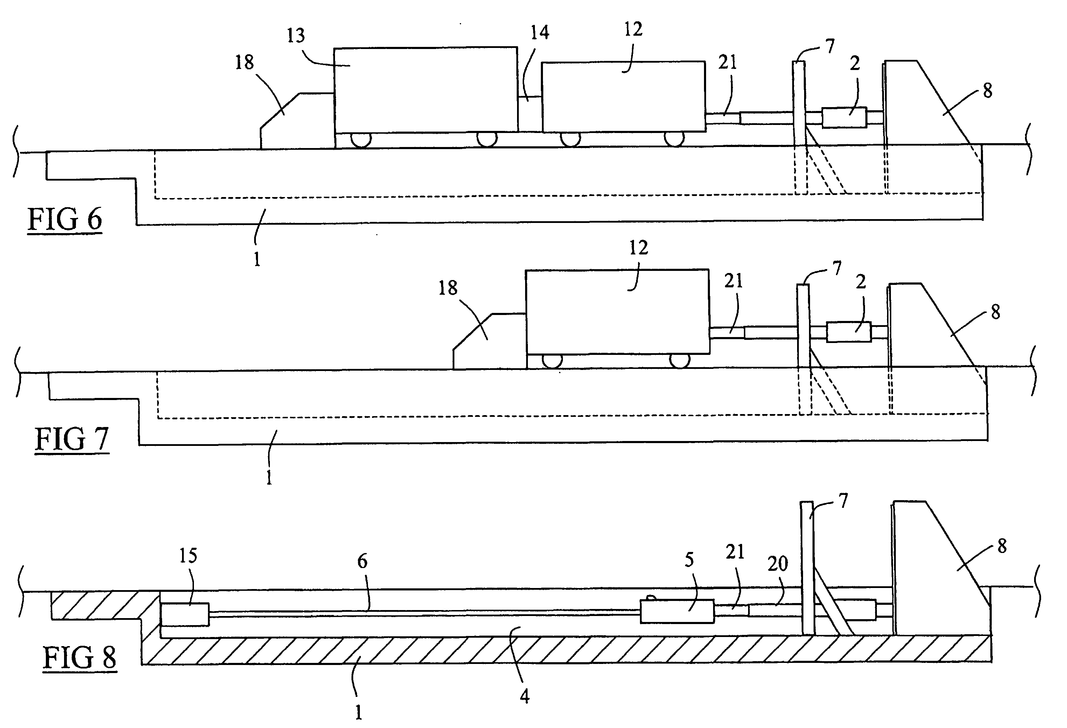

La figure 6 représente encore une autre configuration d'utilisation du dispositif d'essais selon l'invention dans laquelle le lanceur pyrotechnique 2 est utilisé avec une propulsion de la tige de poussée 21 suivant une accélération programmée. Dans cette configuration, un véhicule test 12 supportant un élément absorbeur d'énergie 14 est accolé avec un autre véhicule 13, l'élément absorbeur d'énergie étant interposé entre les deux véhicules 12 et 13. L'ensemble de ces deux véhicules 12 et 13 est pris en sandwich entre une structure métallique 18 fixée sur la dalle de béton 1 et la tige de poussée 21 du lanceur pyrotechnique 2. Pour un tel test, la tige de poussée 21 est disposée à hauteur des châssis rigides des véhicules 12 et 13.

La figure 7 représente une configuration dans laquelle le lanceur pyrotechnique 2 est utilisé comme une presse statique pour soumettre à différents efforts une structure de véhicule ferroviaire. Dans cette configuration, le véhicule 12 à tester est pris en sandwich entre une structure métallique 18 fixée sur la dalle de béton 1 et la tige de poussée 21 du lanceur pyrotechnique 2. Pour un tel test, la tige de poussée est préférentiellement disposée à hauteur du châssis rigide du véhicule 12 mais peu varier en fonction de l'objectif des tests réalisés.

La figure 8 représente une configuration préférentiellement utilisée pour le test d'éléments absorbeurs d'énergie de faible capacité. Dans cette configuration, le lanceur pyrotechnique 2 sera descendu dans la fosse 4 de telle sorte que l'axe du tube de lancement 20 se trouve à la hauteur du chariot de lancement 5. L'élément absorbeur d'énergie 15 à tester est quant à lui disposé à l'extrémité de la fosse 4 dans l'axe du chariot 5 de telle sorte que le chariot catapulté par le lanceur pyrotechnique 2 vienne heurter l'élément absorbeur d'énergie 15. Le chariot de lancement 5 pourra être utilisé seul ou être propulsé en étant relié rigidement par son anneau d'arrimage 51 à un petit véhicule reposant sur les rails de la voie ferrée 3 de façon à accroître la masse venant heurter l'absorbeur d'énergie 15. Dans une variante non représentée utilisant une configuration similaire à la figure 8, le chariot de lancement 5 pourra aussi être utilisé pour tracter, au moyen de l'anneau d'arrimage 51, un véhicule léger, de type automobile, pour réaliser par exemple des essais de crash.

Un tel dispositif permet donc la réalisation d'essais mécaniques, notamment pour tester la résistance des éléments absorbeurs d'énergie du domaine ferroviaire, sur une grande plage de puissance grâce au lanceur pyrotechnique et suivant de nombreuses configurations grâce au réglage en hauteur du lanceur pyrotechnique. De plus, l'immobilisation du lanceur pyrotechnique contre l'effet de recul par un élément butoir sur sa partie arrière qui assure simultanément le parallélisme entre le tube de lancement et la voie ferrée permet de maintenir un excellent parallélisme du tube de lancement avec la voie ferrée pendant les tirs puisque l'effet de recul tend à mettre en appui les surfaces d'appui qui assurent le parallélisme. Enfin, la bonne tenue du parallélisme entre le tube de lancement et la voie ferrée durant les tirs est renforcée par le fait que l'élément butoir et le portique supportant le lanceur pyrotechnique ainsi que la voie ferrée sont solidaires de la même dalle de béton.

## Revendications

1. Dispositif pour la réalisation d'essais mécaniques sur des structures, notamment des éléments absorbeur d'énergie (14,15) du domaine ferroviaire, comportant un lanceur pyrotechnique (2) comportant un tube de lancement (20) dans lequel coulisse une tige de poussée (21) est disposé à une extrémité d'une portion de voie ferrée (3), ledit lanceur pyrotechnique (2) étant supporté dans sa partie centrale par un élément support (7) et étant bloqué vers l'arrière par un élément butoir (8) disposé derrière le lanceur pyrotechnique (2), ledit élément support (7) et ledit élément butoir (8) comportant des moyens de fixation permettant le maintien dudit lanceur pyrotechnique (2) à différentes hauteurs par rapport aux rails de la voie ferrée (3).

2. Dispositif selon la revendication 1, dans lequel ledit élément butoir (8) et ledit élément support (7) reposent sur une dalle de béton (1), ladite dalle de béton (1) supportant également une partie de la portion de voie ferrée (3).

3. Dispositif selon la revendication 2, dans lequel ladite dalle de béton (1) est ancrée dans le sol au moyen de pieux d'ancrage (11) plantés dans le sol et noyés partiellement dans ladite dalle de béton (1).

4. Dispositif selon l'une quelconque des revendications 2 à 3, dans lequel ladite dalle de béton (1) comporte une fosse (4) s'étendant entre les rails de la voie ferrée (3), ladite fosse (4) recevant un chariot de lancement (5) coulissant entre les rails et pouvant être propulsé par la tige de poussée (21).

5. Dispositif selon la revendication 4, dans lequel les moyens de fixation du lanceur pyrotechnique (2) sur l'élément support (7) et l'élément butoir (8) permettent de descendre le lanceur pyrotechnique (2) sous le niveau des rails de la voie ferrée (3) et en ce que ladite fosse (4) présente une paroi faisant face au lanceur pyrotechnique (2) pouvant recevoir un élément absorbeur d'énergie (15) à tester sur lequel vient buter ledit chariot de lancement (5).

6. Dispositif selon l'une quelconque des revendications 1 à 5, dans lequel ledit élément support (7) est un portique comprenant deux éléments verticaux (71) munis de multiples trous permettant la fixation à différentes hauteurs de pattes (72) supportant un anneau (73)entourant le tube de lancement (20), ledit anneau (73) pouvant pivoter sur lesdites pattes (72) suivant un axe horizontal perpendiculaire à l'axe du tube de lancement (20).

7. Dispositif selon l'une quelconque des revendications 1 à 6, dans lequel ledit élément butoir (8) est constitué d'un bloc de béton comportant une paroi sensiblement verticale (8a) sur laquelle est fixée une plaque de fixation (81) disposée parfaitement perpendiculairement au plan des rails de la voie ferrée (3), ladite plaque fixation (81) comportant de multiples trous permettant la fixation à différentes hauteurs d'une chaise d'appui (9) à l'extrémité de laquelle est fixée l'extrémité arrière du lanceur pyrotechnique (2).

8. Dispositif selon l'une quelconque des revendications 1 à 7, dans lequel la tige de poussée (21) est supportée directement par un véhicule (12) au moyen d'un dispositif interface (35) muni de moyens de réglage de la coaxialité de la tige de poussée (21) par rapport au tube de lancement (20).

## Patentansprüche

1. Vorrichtung für mechanische Versuche an Strukturen, insbesondere energieabsorbierenden Elementen (14,15) im Bereich der Eisenbahn, welche ein pyrotechnisches Startgerät (2) umfasst, das ein Abschussrohr (20), in welchem eine Schubstange (21) gleitet, umfasst, und das an einem Ende eines Gleisabschnitts (3) angeordnet ist, wobei das pyrotechnische Startgerät (2) in seinem Mittelteil durch ein Stützelement (7) gestützt wird und nach hinten durch ein Anschlagelement (8), angeordnet hinter dem pyrotechnischen Startgerät (2), blockiert wird, wobei das Stützelement (7) und das Anschlagelement (8) Befestigungsmittel umfassen, die das Halten des pyrotechnischen Startgeräts (2) auf verschiedenen Höhen in Bezug auf die Schienen des Gleises (3) ermöglichen.

2. Vorrichtung gemäß Anspruch 1, in welcher das Anschlagelement (8) und das Stützelement (7) auf einer Betonplatte (1) ruhen, wobei die Betonplatte (1) gleichermaßen einen Teil des Gleisabschnitts (3) stützt.

3. Vorrichtung gemäß Anspruch 2, in welcher die Betonplatte (1) im Boden mittels Verankerungspfählen (11), welche in den Boden gesetzt und teilweise in die Betonplatte (1) eingeschlossen sind, verankert ist.

4. Vorrichtung gemäß irgend einem der Ansprüche 2 bis 3, in welcher die Betonplatte (1) eine Grube (4) umfasst, die sich zwischen den Schienen des Gleises (3) erstreckt, wobei die Grube (4) einen Abschussschlitten (5) aufnimmt, der zwischen den Schienen gleitet und durch die Schubstange (21) angetrieben werden kann.

5. Vorrichtung gemäß Anspruch 4, in welcher die Befestigungsmittel des pyrotechnischen Startgeräts (2) auf dem Stützelement (7) und dem Anschlagelement (8) ermöglichen, das pyrotechnische Startgerät (2) unter die Ebene der Schienen des Gleises (3) abzusenken, und in welcher die Grube (4) eine Wand aufweist, die dem pyrotechnischen Startgerät (2) gegenüberliegt und ein zu testendes energieabsorbierendes Element (15) aufnehmen kann, an welches der Abschussschlitten (5) anstößt.

6. Vorrichtung gemäß irgend einem der Ansprüche 1 bis 5, in welcher das Stützelement (7) ein brückenförmiges Gerüst ist, welches zwei senkrechte Elemente (71) umfasst, die mit mehreren Löchern ausgestattet sind, welche die Befestigung auf verschiedenen Höhen von Befestigungseisen (72) ermöglichen, die einen Ring (73) tragen, der das Abschussrohr (20) umschließt, wobei der Ring (73) auf den Befestigungseisen (72) entlang einer horizontalen Achse senkrecht zur Achse des Abschussrohrs (20) schwenken kann.

7. Vorrichtung gemäß irgend einem der Ansprüche 1 bis 6, in welcher das Anschlagelement (8) aus einem Betonblock gebildet ist, der eine im wesentlichen senkrechte Wand (8a) umfasst, auf welcher eine Befestigungsplatte (81) befestigt ist, die genau senkrecht zur Ebene der Schienen des Gleises (3) angeordnet ist, wobei die Befestigungsplatte (81) mehrere Löcher aufweist, die die Befestigung auf verschiedenen Höhen eines Stützsitzes (9) ermöglichen, an dessen Ende das hintere Ende des pyrotechnischen Startgeräts (2) befestigt ist.

8. Vorrichtung gemäß irgend einem der Ansprüche 1 bis 7, in welcher die Schubstange (21) direkt von einem Fahrzeug (12) gestützt wird mittels einer Anschlussvorrichtung (35), welche mit Mitteln zum Regeln der Fluchtung der Schubstange (21) in Bezug auf das Abschussrohr (20) ausgestattet ist.

## Claims

1. Apparatus for performing mechanical tests on structures, in particular on energy absorber elements (14, 15) in the field of railways, said apparatus comprising a pyrotechnics launcher (2) comprising a launch tube (20) slidably receiving a thrust rod (21) is disposed at one end of a segment of rail track (3), said pyrotechnics launcher (2) being supported in its central portion by a support element (7) and being prevented from moving backwards by a buffer stop element (8) disposed behind the pyrotechnics launcher (2), said support element (7) and said buffer stop element (8) including fixing means making it possible to hold said pyrotechnics launcher (2) at various heights relative to the rails of the rail track (3).

2. Apparatus according to claim 1, in which said buffer stop element (8) and said support element (7) stand on a concrete slab (1), said concrete slab (1) also supporting a portion of the segment of rail track (3).

3. Apparatus according to claim 2, in which said concrete slab (1) is anchored in the ground by means of anchoring piles (11) driven into the ground and embedded in part in said concrete slab (1).

4. Apparatus according to claim 2 or 3, in which said concrete slab (1) is provided with a pit (4) extending between the rails of the rail track (3), said pit (4) receiving a launch trolley (5) which is mounted to slide between the rails and which can be propelled by the thrust rod (21).

5. Apparatus according to claim 4, in which the fixing means for fixing the pyrotechnics launcher (2) to the support element (7) and to the buffer stop element (8) make it possible to lower the pyrotechnics launcher (2) below the level of the rails of the rail track (3), and in that said pit (4) has a wall facing towards the pyrotechnics launcher (2) and that can receive an energy absorber element (15) which is to be tested and against which said launch trolley (5) crashes.

6. Apparatus according to any one of claims 1 to 5, in which said support element (7) is a gantry frame comprising two vertical elements (71) provided with multiple holes making it possible to fix brackets (72) at various heights for supporting a ring (73) surrounding the launch tube (20), it being possible for said ring (73) to pivot on said brackets (72) about a horizontal axis perpendicular to the axis of the launch tube (20).

7. Apparatus according to any one of claims 1 to 6, in which said buffer stop element (8) is constituted by a block of concrete having a substantially vertical wall (8a) against which a fixing plate (81) is fixed that is disposed accurately perpendicular to the plane of the rails of the rail track (3), said fixing plate (81) being provided with multiple holes making it possible to fix, at various heights, an abutment bracket (9) to the end of which the rear end of the pyrotechnics launcher (2) is fixed.

8. Apparatus according to any one of claims 1 to 7, in which the thrust rod (21) is supported directly by a vehicle (12) by means of interface apparatus (35) provided with means for adjusting the alignment of the thrust rod (21) on the axis of the launch tube (20).
